# EUROPÄISCHE PATENTANMELDUNG

(11) **EP 2 769 764 A1**
(43) Veröffentlichungstag der Anmeldung: **27.08.2014**
(21) Anmeldenummer: 14151024.8
(22) Anmeldetag: 14.01.2014
(51) Int. Cl.: B01J 19/10, C10G 31/06

(54) **Durchfluss-Ultraschallreaktor, Ultraschall-Behandlungsanlage und Verfahren zur Behandlung von Substraten**

(30) Priorität: 25.02.2013 DE 102013203043
(71) Anmelder: Weber Entec GmbH & Co. KG, 76307 Karlsbad (DE)
(72) Erfinder: Eichhorst, Christian, 76133 Karlsruhe (DE); Daci, Kushtrim, 76307 Karlsbad (DE)
(74) Vertreter: Lemcke, Brommer & Partner Patentanwälte Partnerschaft mbB

(57) **Zusammenfassung**

Vorgeschlagen wird ein Durchfluss-Ultraschallreaktor (1) für die Desintegration von fließfähigen Substraten, vorzugsweise biogenen Schlämmen, oder zur Behandlung von Vor-, Zwischen- oder Endprodukten bei der Gewinnung von Biodiesel oder Bioethanol, mit wenigstens einem Leitungsabschnitt (2), welcher Leitungsabschnitt zum Durchleiten des Substrats ausgebildet und zur Integration in ein Leitungssystem für das Substrat vorgesehen ist. Der vorgeschlagene Durchfluss-Ultraschallreaktor (1) zeichnet sich dadurch aus, dass außen an dem Leitungsabschnitt (2) wenigstens ein Ultraschallschwinger (4) angeordnet ist, welcher dazu vorgesehen und ausgebildet ist, im Betrieb des Ultraschallreaktors (1) Ultraschallenergie über eine Wandung des Leitungsabschnitts (2) in das Substrat einzustrahlen, um dieses zumindest teilweise zu desintegrieren oder anderweitig mittels Ultraschall zu behandeln. Weiterhin werden ein Verfahren und eine Ultraschall-Behandlungsanlage zur Desintegration von fließfähigen Substraten und zum Einsatz bei der Gewinnung von Biodiesel oder Bioethanol vorgeschlagen.

## Beschreibung

Die Erfindung betrifft einen Durchfluss-Ultraschallreaktor nach dem Oberbegriff des Anspruchs 1 für die Desintegration von fließfähigen Substraten, vorzugsweise biogenen Schlämmen, höchst vorzugsweise zur Substratbehandlung zwecks Beschleunigung des organischen Abbaus und damit Erhöhung der Biogasausbeute bei biogenen Schlämmen, oder zur Behandlung von Vor-, Zwischen- oder Endprodukten bei der Gewinnung von Biodiesel oder Bioethanol, mit wenigstens einem Leitungsabschnitt, welcher Leitungsabschnitt zum Durchleiten des Substrats ausgebildet und zur Integration in ein Leitungssystem für das Substrat vorgesehen ist

Weiterhin betrifft die Erfindung eine Ultraschall-Behandlungsanlage gemäß Anspruch 14 für die Desintegration von fließfähigen Substraten, vorzugsweise biogenen Schlämmen, zur Behandlung von Vor-, Zwischen- oder Endprodukten bei der Gewinnung von Biodiesel oder Bioethanol oder im Bereich Biogasanlagen und Kläranlagen zur Steigerung der Gasausbeute.

Außerdem betrifft die Erfindung ein Verfahren gemäß dem Oberbegriff des Anspruchs 16 zur Desintegration von fließfähigen Substraten, vorzugsweise biogenen Schlämmen, oder zur Behandlung von Vor-, Zwischen- oder Endprodukten bei der Gewinnung von Biodiesel oder Bioethanol, bei dem ein Substrat durch wenigstens einen Leitungsabschnitt eines Ultraschallreaktors gefördert wird. Ein solches Verfahren eignet sich insbesondere zur Substratbehandlung zwecks Beschleunigung des organischen Abbaus und damit Erhöhung der Biogasausbeute bei biogenen Schlämmen.

Herkömmliche Ultraschall-Desintegrationsanlagen verwenden zur Behandlung von Klärschlamm und Biomasse sogenannte Ultraschall-Stabschwinger bzw. Sonotroden, welche unmittelbar in das zu behandelnde Substrat eintauchen, um dieses mit Ultraschall zu beaufschlagen und in der gewünschten Weise zu behandeln, beispielsweise zu desintegrieren. Diese Technologie hat sich beim Einsatz von Ultraschall zu Reinigungszwecken als vorteilhaft erwiesen, da sie bauartbedingt relativ wenig Platz benötigt und in der Regel keine Verformungen an den Schwingern, zum Beispiel durch Vakuum, auftreten.

Anders als im Reinigungsbereich, in dem regelmäßig mit Wasser als relativ dünnflüssigem Reinigungsmedium gearbeitet wird, ist jedoch in Biogasanlagen oder in Anlagen zur Behandlung von Klärschlämmen oder landwirtschaftlichen Substraten die Viskosität des zu behandelnden Mediums (Substrats) relativ hoch, was die optimale Abstrahlung des Ultraschalls durch einen Stabschwinger oder Konverter (Sonotrode) behindert.

Des Weiteren beeinflusst auch die Substrattemperatur und die Durchflussmenge die Charakteristiken der Ultraschallabgabe an das Substrat. Anders als im Reinigungsbereich ändern sich die zuletzt genannten Faktoren bei der Behandlung biogener Substrate im laufenden Betrieb, was sich auf die Arbeitsfrequenz und die Leistungsübertragung durch die eingesetzten Ultraschallschwinger auswirkt. Da Stabschwinger bzw. Sonotroden einen Arbeitsbereich mit relativ geringer Bandbreite von etwa 2 kHz aufweisen, kann es vorkommen, dass die benötigte Arbeitsfrequenz außerhalb dieser Bandbreite liegt, sodass keine Schwingung bzw. keine Ultraschallabgabe an das Substrat erfolgt, was zu einem Aussetzen einer entsprechend ausgestatteten Anlage führen würde.

Weitere Nachteile des Standes der Technik betreffen das regelmäßig bestehende Verstopfungsrisiko eines von dem Substrat durchströmten Leitungsabschnitts zur Ultraschallbeaufschlagung, da das Substrat eng am Ultraschallgeber vorbeigeführt werden muss.

Ein weiterer Nachteil ist das sogenannte Verzopfungsrisiko, bedingt durch eine durch den Kavitationseffekt verursachte Oberflächenrauheit, welche zu Substratablagerungen (Verzopfungen) und somit zur Schalldämpfung oder zu einer Überhitzung und Beschädigung der Ultraschallgeber führt.

Die eingesetzten Stabschwinger weisen darüber hinaus ein abstrahlungsabhängiges inhomogenes Schallfeld auf, sodass die eingetragene Energie nicht gleichmäßig über das Substrat verteilt wird. Das Substrat wird somit zwangsläufig nur bereichsweise mit der idealen Energiemenge behandelt, was oftmals zu einem unbefriedigenden Behandlungsergebnis führt.

Auf das relativ enge Prozessfenster betreffend die Resonanzfrequenz bei Stabschwingern oder dergleichen wurde weiter oben bereits hingewiesen. Diese Schwinger verhalten sich deshalb Substratveränderungen gegenüber stark intolerant, was zu einem Ausfall der gesamten Behandlungsanlage führen kann.

Aufgrund des direkten Kontaktes zwischen Ultraschallgeber und Substrat besitzen die herkömmlicher Weise eingesetzten Stabschwinger oft kritisch kurze Standzeiten.

Der Erfindung liegt die Aufgabe zugrunde, einen Ultraschallreaktor, eine Ultraschall-Behandlungsanlage und ein Ultraschall-Behandlungsverfahren der jeweils eingangs genannten Art anzugeben, welches die vorstehend aufgeführten Nachteile des Standes der Technik überwindet und so die Ultraschallbehandlung relativ hochviskoser, biogener Substrate ermöglicht, wobei das Behandlungsergebnis gegenüber dem Stand der Technik verbessert und die Standzeit der eingesetzten Ultraschallschwinger verlängert werden soll. Außerdem soll ein Ausfall der Ultraschall-Behandlungsanlage bei Veränderungen des Substrats und ein Verstopfen von Leitungsabschnitten wirksam verhindert werden. Zudem soll bei Kläranlagen oder Biogasanlagen die (Bio-)Gasausbeute erhöht werden.

Die Aufgabe wird gelöst durch einen Durchfluss-Ultraschallreaktor mit den Merkmalen des Anspruchs 1, durch eine Ultraschall-Behandlungsanlage mit den Merkmalen des Anspruchs 14 sowie durch ein Verfahren mit den Merkmalen des Anspruchs 16. Vorteilhafte Weiterbildungen der Erfindungsgegenstände sind jeweils auch der Gegenstand von Unteransprüchen, deren Wortlaut hiermit durch ausdrückliche Bezugnahme in die Beschreibung aufgenommen wird.

Erfindungsgemäß ist ein Durchfluss-Ultraschallreaktor für die Desintegration von fließfähigen Substraten, vorzugsweise biogenen Schlämmen, höchst vorzugsweise zur Erhöhung der Ausbeute bei der Erzeugung von Biogas, oder zur Behandlung von Vor-, Zwischen- oder Endprodukten bei der Gewinnung von Biodiesel oder Bioethanol, mit wenigstens einem Leitungsabschnitt, welcher Leitungsabschnitt zum Durchleiten des Substrats ausgebildet und zur Integration in ein Leitungssystem für das Substrat vorgesehen ist, dadurch gekennzeichnet, dass außen an dem Leitungsabschnitt wenigstens ein Ultraschallschwinger angeordnet ist, welcher dazu vorgesehen und ausgebildet ist, im Betrieb des Ultraschallreaktors Ultraschallenergie über eine Wandung des Leitungsabschnitts in das Substrat einzustrahlen, um dieses zumindest teilweise zu desintegrieren oder anderweitig mittels Ultraschall zu behandeln.

Eine erfindungsgemäße Ultraschall-Behandlungsanlage für die Desintegration von fließfähigen Substraten, vorzugsweise biogenen Schlämmen, höchst vorzugsweise für Biogasanlagen oder Kläranlagen zur Steigerung der Gasausbeute, oder zur Behandlung von Vor-, Zwischen- oder Endprodukten bei der Gewinnung von Biodiesel oder Bioethanol umfasst wenigstens einen erfindungsgemäßen Durchfluss-Ultraschallreaktor sowie wenigstens einen Ultraschallgenerator zum Betreiben des wenigstens einen Ultraschallschwingers des Ultraschallreaktors, wobei der Leitungsabschnitt des Ultraschallreaktors in ein Leitungssystem für das Substrat integriert ist.

Erfindungsgemäß ist ein Verfahren zur Desintegration von fließfähigen Substraten, vorzugsweise biogenen Schlämmen, höchst vorzugsweise zur Beschleunigung des organischen Abbaus zwecks Erhöhung der Biogasausbeute, oder zur Behandlung von Vor-, Zwischen- oder Endprodukten bei der Gewinnung von Biodiesel oder Bioethanol, bei dem das Substrat durch wenigstens einen Leitungsabschnitt eines Ultraschallreaktors gefördert wird, dadurch gekennzeichnet, dass das Substrat durch eine Wandung des Leitungsabschnitts mittels wenigstens eines außen an dem Leitungsabschnitt angeordneten Ultraschallschwingers im Betrieb des Ultraschallreaktors mit Ultraschallenergie beaufschlagt wird, um das Substrat zumindest teilweise zu desintegrieren oder anderweitig mittels Ultraschall zu behandeln.

Nach einem Grundgedanken der vorliegenden Erfindung wird also auf die Verwendung herkömmlich eingesetzter Stabschwinger oder Sonotroden verzichtet, und die zur Behandlung des Substrats erforderliche Ultraschallenergie wird über die Wandung des Leitungsabschnitts von außen in das Substrat eingestrahlt, um dieses zumindest teilweise zu desintegrieren oder anderweitig mittels Ultraschall zu behandeln. Da der wenigstens eine Ultraschallschwinger außen an dem Leitungsabschnitt angeordnet ist, kommt es zu keiner Berührung zwischen Ultraschallschwinger und Substrat, wodurch zunächst das oben angesprochene Verstopfungsproblem und Verzopfungsproblem und das Problem kritisch kurzer Standzeiten der eingesetzten Ultraschallschwinger (Ultraschallgeber) gelöst ist. Durch den Verzicht auf Stabschwinger oder Sonotroden lassen sich darüber hinaus homogenere Ultraschallfelder erzeugen; zudem resultieren weniger enge Vorgaben hinsichtlich der zur Verfügung stehenden Frequenzbandbreite. Auf diese Weise lassen sich fließfähige, insbesondere biogene, Substrate verschiedenster Art, wie Klärschlämme, landwirtschaftliche Substrate oder Substrate bei der Herstellung von Bioethanol oder Biodiesel, besser als bisher mittels Ultraschall desintegrieren bzw. anderweitig behandeln, wodurch sich bessere Behandlungsresultate ergeben und die eingesetzten Mittel bzw. Anlagenteile geschont werden. Insbesondere kommt es aufgrund der berührungsfreien Ultraschallbehandlung nicht mehr zu Verstopfungen, Verzopfungen oder zu einem vollständigen Ausfall der Anlage.

Eine erste Weiterbildung des erfindungsgemäßen Ultraschallreaktors sieht vor, dass der wenigstens eine Ultraschallschwinger als Tauchschwinger ausgebildet ist. Tauchschwinger mit an sich bekanntem Aufbau zeichnen sich durch gegenüber Stabschwingern vergrößerte Frequenzbandbreiten im Betrieb aus. Auf diese Weise kann eine Veränderung der oben angesprochenen Substrateigenschaften zwar die Arbeitsfrequenz der eingesetzten Ultraschallschwinger beeinflussen, diese Arbeitsfrequenz wird aber regelmäßig noch innerhalb der Frequenzgrenzen des Ultraschallschwingers liegen. Beispielsweise besitzen vorbekannte Stabschwinger eine Bandbreite von etwa 2 kHz, während die Bandbreite beim Tauchschwinger ca. 5 kHz beträgt. Wenn also die Frequenzgrenzen im Betrieb beim Stabschwinger beispielsweise bei 24 kHz (untere Grenze) und 26 kHz (obere Grenze) liegen, betragen die betreffende Werte beim Tauchschwinger beispielsweise 22 kHz und 27 kHz. Es steht also ein größeres Frequenzfenster zur Verfügung, in welchem die Arbeitsfrequenz liegen und Ultraschallenergie ins Substrat abgegeben werden kann. Darüber hinaus erzeugt ein Tauchschwinger im Vergleich mit einem Stabschwinger oder einer Sonotrode ein homogeneres Schallfeld, da die Schwingelemente beim Tauchschwinger quasi beliebig auf einer zu beschallenden Fläche verteilt werden können.

In diesem Zusammenhang sieht eine andere Weiterbildung des erfindungsgemäßen Ultraschallreaktors vor, dass der Leitungsabschnitt derart ausgebildet ist, dass eine flächige Anlage des wenigstens einen Ultraschallschwingers außen an dem Leitungsabschnitt gegeben ist. Auf diese Weise lässt sich bei der Realisierung des beschriebenen Ultraschallreaktors ein besonders homogenes Schallfeld erreichen.

Wieder eine andere Weiterbildung des erfindungsgemäßen Ultraschallreaktors sieht vor, dass der Leitungsabschnitt wenigstens abschnittsweise eine teilumfänglich ebene Außenkontur aufweist. Hierdurch wird die vorstehend beschriebene flächige Anlage des Ultraschallschwingers außen an dem Leitungsabschnitt besonders begünstigt.

Eine äußerst bevorzugte Weiterbildung des erfindungsgemäßen Ultraschallreaktors sieht entsprechend vor, dass der Leitungsabschnitt wenigstens abschnittsweise einen mehreckigen Querschnitt aufweist, vorzugsweise einen rechteckigen Querschnitt, höchst vorzugsweise einen quadratischen Querschnitt. Auf diese Weise können Ultraschallschwinger auf mehreren, sich zumindest teilweise auch gegenüberliegenden Begrenzungsflächen des Leitungsabschnitts platziert werden, um die Homogenität des erreichbaren Ultraschallfelds zu optimieren und eine möglichst gute Behandlungswirkung zu erreichen.

Es hat sich als äußerst vorteilhaft herausgestellt, wenn der Leitungsabschnitt in Edelstahl, vorzugsweise und ohne Beschränkung dem Werkstoff 1.4462, ausgebildet ist. Die Wanddicke des Leitungsabschnitts kann dabei zwischen 1 mm und 5 mm betragen; sie beträgt vorzugsweise etwa 3 mm. Die Ausbildung des Leitungsabschnitts in Edelstahl sorgt dafür, dass es auch bei aggressiveren Substraten zu keiner Beeinträchtigung des Ultraschallreaktors kommt.

Eine wieder andere Weiterbildung des erfindungsgemäßen Ultraschallreaktors sieht vor, dass der wenigstens eine Ultraschallgeber außen auf dem Leitungsabschnitt stoffschlüssig befestigt ist. Es hat sich als besonders vorteilhaft erwiesen, wenn der wenigstens eine Ultraschallgeber außen auf dem Leitungsabschnitt aufgeklebt ist.

Um die Behandlungsstrecke innerhalb des Ultraschallreaktors und entsprechend die Ausdehnung des Ultraschallfeldes zu vergrößern, sieht eine andere vorteilhafte Weiterbildung des Ultraschallreaktors vor, dass auf wenigstens einer Seitenfläche des Leitungsabschnitts in Längsrichtung, das heißt in Strömungsrichtung des Substrats, mehrere Ultraschallschwinger hintereinander angeordnet sind.

Wenn der Ultraschallreaktor entsprechend mehrere Seitenflächen des Leitungsabschnitts aufweist, sieht eine wieder andere Weiterbildung des Ultraschallreaktors vor, dass pro Seitenfläche jeweils eine Anzahl bzw. Mehrzahl an Ultraschallschwingern angeordnet ist, vorzugsweise jeweils die gleiche Anzahl Ultraschallschwinger pro Seitenfläche. Im Rahmen einer besonders vorteilhaften Ausgestaltung der Erfindung hat sich eine Anzahl von 4 x 6 Ultraschallschwingern (vier Seiten mit jeweils sechs Schwingern) als besonders geeignet erwiesen. Hierbei wies der Leitungsabschnitt eine rechteckige Formgebung auf, und auf jeder der vier Seitenflächen des Leitungsabschnitts waren sechs Ultraschall-Tauchschwinger hintereinander aufgeklebt.

Hierbei wurde im Zuge einer wieder anderen Weiterbildung des erfindungsgemäßen Ultraschallreaktors darauf geachtet, dass die Ultraschallschwinger an den verschiedenen Seitenflächen des Leitungsabschnitts im Wesentlichen einander genau gegenüberliegend angeordnet sind.

Um den Ultraschallreaktor ohne weitere Umstände in ein (bestehendes) Leitungssystem für das Substrat (beispielsweise in einer bestehenden UltraschallBehandlungsanlage, einer bestehenden Biogas- oder Bioethanolanlage oder in einer anderweitigen Anlage zur Behandlung von fließfähigen Substraten, wie biogenen Schlämmen oder dergleichen) einsetzen zu können, sieht eine äußerst bevorzugte Weiterbildung des Erfindungsgegenstandes vor, dass der Leitungsabschnitt des Ultraschallreaktors endständig wenigstens einen Anschlussflansch aufweist. Dieser Anschlussflansch dient zum Verbinden mit weiteren Bestandteilen eines Leitungssystems für das Substrat. Vorzugsweise handelt es sich bei dem genannten Anschlussflansch um einen DIN-Norm-Anschlussflansch. Gleiches trifft vorteilhafter Weise auch für die Anschlussflansche des Leitungssystems zu.

Um ein möglichst homogenes Schallfeld zu erreichen und den Betrieb des Ultraschallreaktors zu optimieren, sieht eine andere Weiterbildung der Erfindung vor, dass bei einer Mehrzahl von Ultraschallschwingern die Ultraschallschwinger parallel zueinander betreibbar sind, wobei sie vorzugsweise synchron schwingen, höchst vorzugsweise mittels eines einzigen, gemeinsamen Ultraschallgenerators.

In Weiterbildung der erfindungsgemäßen Ultraschall-Behandlungsanlage kann vorgesehen sein, dass in das Leitungssystem wenigstens ein Fördermittel für das Substrat integriert ist, welches nach Art einer Pumpe ausgestaltet sein kann. Optional kann in das Leitungssystem zusätzlich noch eine mechanische Zerkleinerungseinrichtung integriert sein, welche als Mazerator ausgebildet sein kann. Es hat sich weiterhin als vorteilhaft erwiesen, wenn das Fördermittel fluidtechnisch zwischen Zerkleinerungseinrichtung und Leitungsabschnitt des Durchfluss-Ultraschallreaktors angeordnet ist, was entsprechend eine bevorzugte Weiterbildung der erfindungsgemäßen Ultraschall-Behandlungsanlage darstellt.

Entsprechend ist in Weiterbildung des erfindungsgemäßen Verfahrens vorgesehen, dass das Substrat vor dem Durchströmen des Leitungsabschnitts einer weiteren Behandlung unterzogen wird, vorzugsweise einer mechanischen Zerkleinerung, beispielsweise in dem weiter oben erwähnten Mazerator (Zerkleinerungseinrichtung).

Die Erfindung ist weiterhin nicht darauf beschränkt, dass zur Durchführung des Verfahrens bzw. in einer Ultraschall-Behandlungsanlage nur ein einzelner erfindungsgemäßer Ultraschallreaktor zum Einsatz kommt. Vielmehr kann eine beliebige Anzahl von n (n ≥ 1) kaskadierbaren oder parallel geschalteten Ultraschallreaktoren zum Einsatz kommen.

Als zu behandelnde Substrate kommen neben Vor-, Zwischen- und Endprodukten der Bioethanol- oder Biodieselerzeugung alle biogenen Schlämme, wie Klärschlämme (Rohschlamm, Mischschlamm, Überschussschlamm, Primärschlamm), landwirtschaftliche Substrate, wie Mais, Maissilage, Grünschnitt, Ganzpflanzensilage (GPS), Mist, Hühnertrockenkot (HTK), Geflügelmist, Rindergülle, Schweinegülle, Speiseabfälle, Schlachtabfälle usw. in Betracht. Der Gehalt an Trockensubstanz kann dabei zwischen 2 und 15 % liegen.

Im Rahmen einer konkreten Umsetzung der Erfindungsidee wies ein Ultraschallreaktor - wie bereits beschrieben - insgesamt 24 Schwingelemente in einer nominellen Arbeitsfrequenz von 25 kHz verteilt auf die vier Seiten eines insgesamt im Querschnitt rechteckförmigen Leitungsabschnitts auf. Die genannten 24 Schwingelemente wurden von außen auf den Leitungsabschnitt aufgeklebt und miteinander verdrahtet. Dies entsprach einer Gesamt-Ultraschallleistung von 2000 Watt. Die elektrische Energie für den Reaktor wurde durch einen einzigen Ultraschallgenerator geliefert. Für die Produktion des Ultraschallreaktors bzw. des Leitungsabschnitts wurde Edelstahl 1.4462 mit einer Stärke von 3 mm verwendet.

Der Abgleich des Generators erfolgte zunächst mit Wasser als Medium und zeigte auch im anschließenden Betrieb mit Biomasse keinerlei Probleme hinsichtlich des Resonanzverhaltens der eingesetzten Schwingelemente. Der Ultraschallreaktor wurde mit Biomasse unterschiedlicher Viskosität bei verschiedenen Temperaturen des eingesetzten Substrats getestet und hat sich dabei als robuster und funktionsfähiger Ultraschallreaktor erwiesen.

Eine Überhitzung der Ultraschallschwingelemente ist auszuschließen, da sich der vom Ultraschallgenerator gelieferte Betriebsstrom auf alle eingesetzten Ultraschallschwingelemente verteilt.

Durch die DIN-Norm-Flanschen am Ein- und Ausgang des Ultraschallreaktors lässt sich dieser ohne Weiteres in bestehende Leitungssysteme einsetzen (sogenannte "Plug-and-Play").

Der beschriebene Ultraschallgenerator kann von dem Substrat ungehindert durchströmt werden und ist daher praktisch verstopfungsfrei.

Insbesondere durch die beschriebene vorteilhafte Anordnung der Ultraschallschwingelemente weist der Ultraschallreaktor ein weitgehend homogenes Ultraschallfeld auf. Alle Substratkomponenten können entsprechend mit derselben spezifischen Energie behandelt werden. Als zusätzlichen Effekt bewirkt dies auch eine effizientere und länger anhaltende Schallwellenausbreitung und einen somit deutlich energieeffizienteren Betrieb des Ultraschallreaktors.

Bauartbedingt kann der beschriebene Ultraschallreaktor ein sehr breites frequenzbezogenes Prozessfenster aufweisen, wobei die Resonanzfrequenz über ein breites Spektrum von Substraten mit unterschiedlichem Gehalt an Trockensubstanz stabil bleibt. Diese Fähigkeit hat sich besonders beim Einsatz in Biogasanlagen als wichtig erwiesen.

Im Test wies ein erfindungsgemäßer Ultraschallreaktor auch nach zwölf Monaten Dauereinsatz kaum Verschleißspuren auf, was insbesondere daran liegt, dass die eingesetzten Ultraschallschwingelemente nicht mit dem Substrat in Kontakt treten.

Weitere Eigenschaften und Vorteile der Erfindung ergeben sich aus der nachfolgenden Beschreibung von Ausführungsbeispielen anhand der Zeichnung.
- Figur 1: zeigt einen erfindungsgemäßen Durchfluss-Ultraschallreaktor in einer Seitenansicht;
- Figur 2: zeigt den Durchfluss-Ultraschallreaktor aus Figur 1 in einer Schnittansicht gemäß der Linie II-II in Figur 1; und
- Figur 3: zeigt schematisch eine erfindungsgemäße UltraschallBehandlungsanlage.

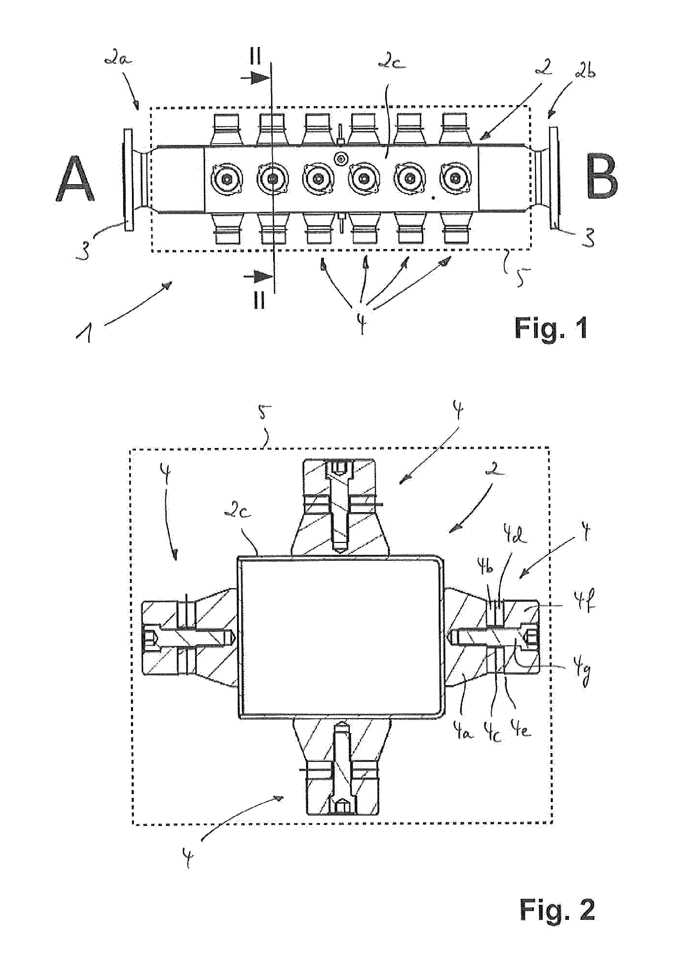

Figur 1 zeigt in einer Seitenansicht eine Ausgestaltung des erfindungsgemäßen Durchfluss-Ultraschallreaktors, welcher in seiner Gesamtheit mit dem Bezugszeichen 1 bezeichnet ist. Der Durchfluss-Ultraschallreaktor (oder kurz: Ultraschallreaktor) 1 umfasst einen Leitungsabschnitt 2, der zum Durchleiten eines relativ hochviskosen Substrats ausgebildet und zur Integration in ein Leitungssystem für das Substrat vorgesehen ist. Zu diesem Zweck weist der Ultraschallreaktor 1 an dem Leitungsabschnitt 2 endständige Anschlussbereiche 2a, 2b auf, die mit vorzugsweise genormten Anschlussflanschen 3 versehen sind, um den Ultraschallreaktor 1 in einfacher Weise in ein bestehendes Substrat-Leitungssystem integrieren zu können.

Der genannte Leitungsabschnitt 2 weist einen zentralen Bereich 2c auf, in dem der Leitungsabschnitt 2 mit rechteckigem Querschnitt ausgebildet ist, wie sich insbesondere aus der Schnittansicht gemäß Figur 2 ergibt. In diesem zentralen Bereich 2c sind außen an dem Leitungsabschnitt 2 eine Anzahl von Ultraschallschwingern angeordnet, die in Figur 1 und Figur 2 mit dem Bezugszeichen 4 bezeichnet sind. Aus Gründen der Übersichtlichkeit sind nur einige wenige Ultraschallschwinger 4 explizit bezeichnet.

Wie sich insbesondere der Darstellung in Figur 2 entnehmen lässt, sind die Ultraschallschwinger 4 als sogenannte Tauchschwinger ausgebildet und flächig von außen auf ebene Mantelflächen des Leitungsabschnitts 2 in dem zentralen Bereich 2c aufgesetzt, speziell aufgeklebt. Gemäß der Darstellung in Figur 2 umfasst jeder Ultraschallschwinger (Tauchschwinger) 4 ein mit dem Leitungsabschnitt 2 flächig in Kontakt tretendes Basiselement 4a, an das sich der Reihe nach eine erste Piezokeramik 4b, eine erste Kontaktscheibe 4c, eine zweite Piezokeramik 4b, eine zweite Kontaktscheibe 4e sowie ein Anpresselement 4f anschließen. Zusammengehalten wird die genannte Anordnung mittels einer Befestigungsschraube 4g. Dieser Aufbau der einzelnen Ultraschallschwinger 4 ist dem Fachmann grundsätzlich bekannt, sodass hierauf vorliegend nicht weiter einzugehen ist. Die einzelnen Ultraschallschwinger 4 sind - wie bereits angemerkt wurde - mit der flachen Vorderseite ihres jeweiligen Basiselements 4a flächig auf die Außenseite des Leitungsabschnitts 2 in dem zentralen Bereich 2c aufgeklebt. Dies geschieht gemäß Figur 1 und Figur 2 derart, dass sich jeweils zwei Ultraschallschwinger 4 paarweise genau gegenüber liegen. Wie sich insbesondere aus Figur 1 ergibt, sind auf jeder der vier Seitenflächen des Leitungsabschnitts 2 in dem zentralen Bereich 2c sechs Ultraschallschwinger 4 auf einer Linie hintereinander angeordnet. Auf diese Weise ergibt sich innerhalb des Leitungsabschnitts 2 quasi in dem gesamten zentralen Bereich 2c ein homogenes Ultraschallfeld, in dem auf ein durch den Leitungsabschnitt 2 gefördertes zu behandelndes Substrat (in Figur 1 und 2 nicht gezeigt) eingewirkt werden kann.

In Figur 1 sind die beiden Anschlussseiten des Ultraschallreaktors 1 mit den Buchstaben A und B bezeichnet. Da der gesamte Ultraschallreaktor 1 bezogen auf eine mittlere Querebene symmetrisch aufgebaut ist, kann ein zu behandelndes Substrat sowohl bei A als auch B in den Ultraschallreaktor 1 eingeleitet werden. Die Einbaurichtung des Ultraschallreaktors 1 ist folglich umkehrbar.

Weiterhin bezeichnet in den Figuren 1 und 2 die gestrichelte Umrandung 5 ein Gehäuse für den Ultraschallreaktor 1, welches zumindest den zentralen Bereich 2c des Leitungsabschnitts 2 zu allen Seiten nach außen abschließt, um insbesondere die Ultraschallschwinger 4, deren elektrische Anschlüsse (nicht gezeigt) und möglicherweise an den Ultraschallschwingern 4 und/oder dem Leitungsabschnitt 2 angeordnete Sensorik gegen äußere Schadeinflüsse zu schützen. Gemäß der Darstellung in Figur 1 ragen nur die Anschlussenden 2a, 2b mit den Anschlussflanschen 3 aus dem Gehäuse 5 heraus.

Wie sich insbesondere aus der Darstellung in Figur 2 ergibt, kommt auf diese Weise ein durch den Leitungsabschnitt 2 gefördertes Substrat nicht mit den Ultraschallschwingern 4 in Kontakt. Dadurch erhöht sich die Lebensdauer der Ultraschallschwinger 4, und es ergibt sich aufgrund des unbeeinträchtigten Strömungsquerschnitts innerhalb des Leitungsabschnitts 2 ein verbessertes Strömungsverhalten des Substrats - verglichen mit vorbekannten Anordnungen, bei denen Ultraschallschwinger in Form von Stabschwingern in das strömende Medium hineinragen.

Wie der Fachmann leicht erkennt, ist die Erfindung keinesfalls auf die vorstehend nur exemplarisch beschriebene rechteckige Ausgestaltung des zentralen Abschnitts 2c des Leitungsabschnitts 2 beschränkt. Entscheidend ist lediglich, dass der Leitungsabschnitt 2 in dem genannten Bereich wenigstens eine teilweise ebene Begrenzungsfläche aufweist, auf die Ultraschallschwinger 4 der genannten Art flächig aufgesetzt bzw. aufgeklebt werden können. Der Leitungsabschnitt 2 könnte in dem genannten Bereich 2c im Querschnitt also auch dreieckig oder in irgendeiner anderen Weise mehreckig (polygonal) ausgebildet sein. Insbesondere eine sechseckige oder eine achteckige Anordnung könnte in besonderer Weise geeignet sein, um das gewünschte, möglichst homogene Ultraschallfeld im Inneren des Leitungsabschnitts zu erzeugen.

Zumindest der Leitungsabschnitt 2 des gezeigten Ultraschallreaktors 1 ist in Edelstahl, vorzugsweise dem Werkstoff 1.4462, ausgebildet und weist eine Wanddicke zwischen 1 mm und 5 mm auf, wobei eine Wanddicke von 3 mm sich als besonders vorteilhaft erwiesen hat.

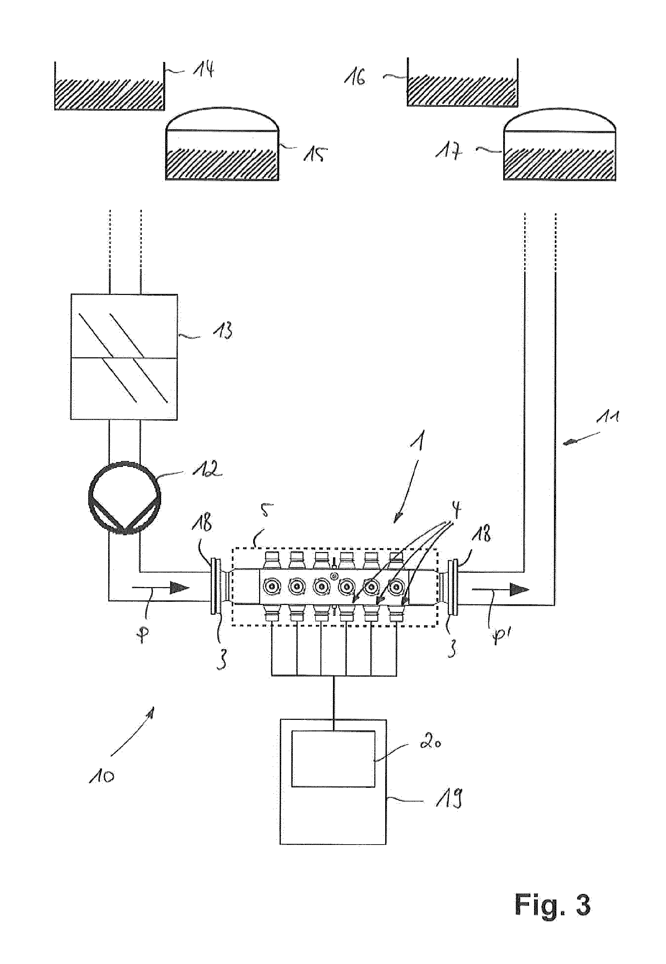

Figur 3 zeigt schematisch eine Ultraschall-Behandlungsanlage, welche insgesamt mit dem Bezugszeichen 10 bezeichnet ist und welche wenigstens einen Durchfluss-Ultraschallreaktor 1 der weiter oben beschriebenen Art beinhaltet. Für den genauen Aufbau des Ultraschallreaktors 1 gemäß Figur 3 sei auf die obige Beschreibung der Figuren 1 und 2 verwiesen; aus Gründen der Übersichtlichkeit sind in Figur 3 nur der Ultraschallreaktor 1 als solcher, dessen Gehäuse 5, die Anschlussflansche 3 sowie einige der Ultraschallschwinger 4 explizit bezeichnet.

Bezugszeichen 11 bezeichnet ein Leitungssystem für ein Substrat, beispielsweise biogenen Schlamm bzw. ein Vor-, Zwischen- oder Endprodukt bei der Gewinnung von Biodiesel oder Bioethanol. Eine Strömungsrichtung des Substrats in dem Leitungssystem 11 ist mit Pfeilen P, P' bezeichnet. Bezugszeichen 12 kennzeichnet ein Fördermittel für das Substrat innerhalb des Leitungssystems 11, welches Fördermittel als Pumpe ausgebildet sein kann. Bei Bezugszeichen 13 ist eine mechanische Zerkleinerungseinrichtung für das Substrat dargestellt, welche speziell als Mazerator ausgebildet sein kann. Nur schematisch dargestellt sind Tank- oder Lagereinrichtungen für das Substrat vor und nach dessen Behandlung in dem Ultraschallreaktor 1. Beispielhaft bezeichnet Bezugszeichen 14 eine sogenannte Vorgrube, Bezugszeichen 15 einen ersten Fermenter, Bezugszeichen 16 ein Gärrückstandslager und Bezugszeichen 17 einen zweiten Fermenter. Derartige Einrichtungen sind dem Fachmann beispielsweise aus der Biogas-Anlagentechnik bekannt, sodass auf die Elemente 14 - 17 und deren fluidtechnische Verbindung untereinander vorliegend nicht weiter einzugehen ist.

Gemäß der Darstellung in Figur 3 sind die Elemente 13, 12 und 1 in Strömungsrichtung P, P' des Substrats hintereinander geschaltet. Die Pumpe 12 saugt folglich das Substrat durch den Mazerator 13 und fördert das so vorzerkleinerte Substrat zu dem bzw. durch den Ultraschallreaktor 1. Der Ultraschallreaktor 1 ist mit seinen Anschlussflanschen 3 mit hierfür geeigneten Anschlussflanschen 18 des Leitungssystems 11 verbunden. Vorzugsweise handelt es sich sowohl bei den Flanschen 3 als auch bei den Flanschen 18 um (DIN-)genormte Flanschen, sodass sich der Ultraschallreaktor 1 ohne Weiteres in bestehende Leitungssysteme 11 integrieren lässt (sogenanntes "Plug-and-Play").

Zum Betreiben der Ultraschallschwinger 4 steht der Ultraschallreaktor 1 in elektrischer bzw. signaltechnischer Wirkverbindung mit einer UltraschallSteuereinheit 19. Die Ultraschall-Steuereinheit 19 umfasst einen Ultraschallgenerator 20, der in der gezeigten Weise elektrisch bzw. signaltechnisch mit den Ultraschallschwingern 4 verbunden ist. Aus Gründen der Übersichtlichkeit sind in Figur 3 nur einige ausgewählte Leitungen zwischen dem Ultraschallgenerator 20 und den Ultraschallschwingern 4 explizit eingezeichnet. Der Ultraschallgenerator 20 versorgt die Ultraschallschwinger 4 mit geeigneten elektronischen Signalen, um die Ultraschallschwinger 4 gemäß ihrer jeweiligen Charakteristik zum Aussenden von Ultraschall anzuregen. Vorzugsweise sind alle Ultraschallschwinger 4 im Wesentlichen, das heißt bis auf Herstellungs- und Fertigungstoleranzen, identisch ausgebildet und parallel zueinander betreibbar, sodass sie synchron Ultraschall mit im Wesentlichen identischer Charakteristik in den Ultraschallreaktor 1 bzw. den Leitungsabschnitt 2 (vergleiche Figuren 1 und 2) einstrahlen. Vorzugsweise kommt gemäß der Darstellung in Figur 3 ein einzelner Ultraschallgenerator 20 zum Einsatz, der alle eingesetzten Ultraschallschwinger 4 mit elektrischer Energie versorgt. Bewährt hat sich in diesem Zusammenhang die Verwendung von 4 x 6, das heißt 24 Ultraschallschwingern 4 mit einer Gesamt-Ultraschallleistung von 2000 Watt.

Neben der weiter oben bereits angesprochenen Verwendung des Ultraschallreaktors 1 in Anlagen zur Gewinnung von Bioethanol oder Biodiesel liegt eine bevorzugte weitere Anwendung der Erfindung im Bereich der Desintegration von Klärschlamm oder anderen biogenen Schlämmen. Hierzu gehören insbesondere Klärschlämme, wie Rohschlamm, Mischschlamm, Überschussschlamm und Primärschlamm, sowie landwirtschaftliche Substrate, wie Mais, Maissilage, Grünschnitt, Ganzpflanzensilage (GPS), Mist, Hühnertrockenkot (HTK), Geflügelmist, Rindergülle, Schweinegülle, Speiseabfälle, Schlachtabfälle und dergleichen. Der Gehalt an Trockensubstanz (Feststoffgehalt) im Substrat kann zwischen 2 und 15 % liegen.

Selbstverständlich ist die Erfindung nicht auf die Verwendung eines einzelnen Ultraschallreaktors 1 beschränkt. Vielmehr können quasi beliebig viele Ultraschallreaktoren 1 kaskadierend und/oder parallel angeordnet werden.

Die Verwendung einer mechanischen Vorbehandlung (Vorzerkleinerung) ist optional, trägt jedoch zur Vorhomogenisierung und zum Schutz der restlichen Anlagetechnik bei.

Die Pumpe 12, die auch als Dosierpumpe bezeichnet werden kann, wird derart betrieben, dass sie das Substrat mit einer an die Art des Substrats angepassten optimalen Geschwindigkeit durch den Ultraschallreaktor 1 bzw. die Ultraschallreaktoren drückt. In der in Figur 3 gezeigten Anordnung zieht die Pumpe 12 das anfangs noch unbehandelte Substrat durch den Mazerator 13, wodurch in vorteilhafter Weise die Pumpe 12 selbst nur mit dem bereits vorhomogenisierten Substrat in Kontakt kommt.

### Bezugszeichenliste

- 1: (Durchfluss-)Ultraschallreaktor
- 2: Leitungsabschnitt
- 2a: Anschlussende
- 2b: Anschlussende
- 2c: zentraler Bereich
- 3: Anschlussflansch
- 4: Ultraschallschwinger
- 4a: Basiselement
- 4b: Piezokeramik
- 4c: Kontaktscheibe
- 4d: Piezokeramik
- 4e: Kontaktscheibe
- 4f: Anpresselement
- 4g: Befestigungsschraube
- 5: Gehäuse
- 10: Ultraschall-Behandlungsanlage
- 11: Leitungssystem
- 12: Fördermittel (Pumpe)
- 13: Zerkleinerungseinrichtung (Mazerator)
- 14: Vorgrube
- 15: erster Fermenter
- 16: Gärrückstandslager
- 17: zweiter Fermenter
- 18: Anschlussflansch
- 19: Ultraschall-Steuereinheit
- 20: Ultraschallgenerator
- P: Substratstrom
- P': Substratstrom

## Patentansprüche

1. Durchfluss-Ultraschallreaktor (1) für die Desintegration von fließfähigen Substraten, vorzugsweise biogenen Schlämmen, höchst vorzugsweise zur Erhöhung der Ausbeute bei der Erzeugung von Biogas, oder zur Behandlung von Vor-, Zwischen- oder Endprodukten bei der Gewinnung von Biodiesel oder Bioethanol, mit wenigstens einem Leitungsabschnitt (2), welcher Leitungsabschnitt zum Durchleiten des Substrats ausgebildet und zur Integration in ein Leitungssystem (11) für das Substrat vorgesehen ist,
**dadurch gekennzeichnet, dass**
außen an dem Leitungsabschnitt (2) wenigstens ein Ultraschallschwinger (4) angeordnet ist, welcher dazu vorgesehen und ausgebildet ist, im Betrieb des Ultraschallreaktors (1) Ultraschallenergie über eine Wandung des Leitungsabschnitts (2) in das Substrat einzustrahlen, um dieses zumindest teilweise zu desintegrieren oder anderweitig mittels Ultraschall zu behandeln.

2. Durchfluss-Ultraschallreaktor (1) nach Anspruch 1,
**dadurch gekennzeichnet, dass**
der wenigstens eine Ultraschallschwinger (4) als Tauchschwinger ausgebildet ist

3. Durchfluss-Ultraschallreaktor (1) nach Anspruch 1 oder 2,
**dadurch gekennzeichnet, dass**
der Leitungsabschnitt (2) derart ausgebildet ist, dass eine flächige Anlage des wenigstens einen Ultraschallschwingers (4) außen an dem Leitungsabschnitt gegeben ist.

4. Durchfluss-Ultraschallreaktor (1) nach mindestens einem der Ansprüche 1 bis 3,
**dadurch gekennzeichnet, dass**
der Leitungsabschnitt (2) wenigstens abschnittweise (2c) eine teilumfänglich ebene Außenkontur aufweist.

5. Durchfluss-Ultraschallreaktor (1) nach mindestens einem der Ansprüche 1 bis 4,
**dadurch gekennzeichnet, dass**
der Leitungsabschnitt (2) wenigstens abschnittweise (2c) einen mehreckigen Querschnitt aufweist, vorzugsweise einen rechteckigen Querschnitt, höchst vorzugsweise einen quadratischen Querschnitt.

6. Durchfluss-Ultraschallreaktor (1) nach mindestens einem der Ansprüche 1 bis 5,
**dadurch gekennzeichnet, dass**
der wenigstens eine Ultraschallschwinger (4) außen auf dem Leitungsabschnitt (2) stoffschlüssig befestigt ist, vorzugsweise aufgeklebt.

7. Durchfluss-Ultraschallreaktor (1) nach mindestens einem der Ansprüche 1 bis 6,
**dadurch gekennzeichnet, dass**
auf wenigstens einer Seitenfläche des Leitungsabschnitts (2) in Längsrichtung mehrere Ultraschallschwinger (4) hintereinander angeordnet sind.

8. Durchfluss-Ultraschallreaktor (1) nach mindestens einem der Ansprüche 1 bis 7,
**dadurch gekennzeichnet, dass**
auf mehreren Seitenflächen des Leitungsabschnitts (2) jeweils eine Anzahl an Ultraschallschwingern (4) angeordnet ist, vorzugsweise jeweils eine gleiche Anzahl an Ultraschallschwingern pro Seitenfläche, höchst vorzugsweise vier Mal sechs Ultraschallschwinger.

9. Durchfluss-Ultraschallreaktor (1) nach Anspruch 8,
**dadurch gekennzeichnet, dass**
die Ultraschallschwinger (4) an verschiedenen Seitenflächen des Leitungsabschnitts (2) im Wesentlichen einander genau gegenüber liegend angeordnet sind.

10. Durchfluss-Ultraschallreaktor (1) nach mindestens einem der Ansprüche 1 bis 9,
**dadurch gekennzeichnet, dass** der Leitungsabschnitt (2) endständig wenigstens einen Anschlussflansch (3) aufweist zum Verbinden mit weiteren Bestandteilen eines Leitungssystems (11) für das Substrat, vorzugsweise einen DIN-Norm-Anschlussflansch.

11. Durchfluss-Ultraschallreaktor (1) nach mindestens einem der Ansprüche 1 bis 10,
**dadurch gekennzeichnet, dass**
bei Vorsehen einer Mehrzahl an Ultraschallschwingern die Ultraschallschwinger (4) parallel zueinander betreibbar sind, vorzugsweise synchron schwingend, höchst vorzugsweise mittels eines einzigen, gemeinsamen Ultraschallgenerators (20).

12. Ultraschallbehandlungsanlage (10) für die Desintegration von fließfähigen Substraten, vorzugsweise biogenen Schlämmen, höchst vorzugsweise für Biogasanlagen oder Kläranlagen zur Steigerung der Gasausbeute, oder zur Behandlung von Vor-, Zwischen- oder Endprodukten bei der Gewinnung von Biodiesel oder Bioethanol, mit wenigstens einem Durchfluss-Ultraschallreaktor (1) gemäß einem der Ansprüche 1 bis 11 und mit wenigstens einem Ultraschallgenerator (20) zum Betreiben des wenigstens einen Ultraschallschwingers (4), wobei der Leitungsabschnitt (2) des DurchflussUltraschallreaktors in ein Leitungssystem (11) für das Substrat integriert ist.

13. Ultraschallbehandlungsanlage (10) nach Anspruch 12,
**dadurch gekennzeichnet, dass**
in das Leitungssystem (11) wenigstens ein Fördermittel (12) für das Substrat, vorzugsweise eine Pumpe, und/oder eine Zerkleinerungseinrichtung (13), vorzugsweise ein Mazerator, integriert ist, wobei höchst vorzugsweise das Fördermittel (12) fluidtechnisch zwischen Zerkleinerungseinrichtung (13) und Leitungsabschnitt (2) des Durchfluss-Ultraschallreaktors (1) angeordnet ist.

14. Verfahren zur Desintegration von fließfähigen Substraten, vorzugsweise biogenen Schlämmen, höchst vorzugsweise zur Beschleunigung des organischen Abbaus zwecks Erhöhung der Biogasausbeute, oder zur Behandlung von Vor-, Zwischen- oder Endprodukten bei der Gewinnung von Biodiesel oder Bioethanol, bei dem das Substrat durch wenigstens einen Leitungsabschnitt (2) eines Ultraschallreaktors (1) gefördert wird,
**dadurch gekennzeichnet, dass**
das Substrat durch eine Wandung des Leitungsabschnitts (2) mittels wenigstens eines außen an dem Leitungsabschnitt (2) angeordneten Ultraschallschwingers (4) im Betrieb des Ultraschallreaktors (1) mit Ultraschallenergie beaufschlagt wird, um das Substrat zumindest teilweise zu desintegrieren oder anderweitig mittels Ultraschall zu behandeln.

15. Verfahren nach Anspruch 14,
**dadurch gekennzeichnet, dass**
das Substrat von dem Durchströmen des Leitungsabschnitts (2) einer weiteren Behandlung unterzogen wird, vorzugsweise einer mechanischen Zerkleinerung (13).
